# EUROPÄISCHE PATENTANMELDUNG

(11) **EP 2 423 535 A2**
(43) Veröffentlichungstag der Anmeldung: **29.02.2012**
(21) Anmeldenummer: 11450042.4
(22) Anmeldetag: 24.03.2011
(51) Int. Cl.: F16G 3/10, B65G 15/36

(54) **Fördergurt für eine Bandförderanlage**

(30) Priorität: 23.08.2010 AT 14072010
(71) Anmelder: Innova Patent GmbH, 6960 Wolfurt (AT)
(72) Erfinder: Trieb, Herbert, 6911 Lochau (AT)
(74) Vertreter: Hehenberger, Reinhard

(57) **Zusammenfassung**

Fördergurt für eine Bandförderanlage, welcher aus Gummi oder einem gummiartigen Kunststoff hergestellt ist und welcher durch sich in Längsrichtung des Fördergurtes erstreckende und zumindest angenähert parallel zueinander verlaufende Stahlseile (2) verstärkt ist, wobei der Fördergurt aus miteinander verbundenen Abschnitten (12) besteht und die Stahlseile (2), welche eine innen befindliche Seilseele (21) und diese schraubenlinienförmig umgebende Seillitzen (22) aufweisen, in den Endbereichen der Abschnitte (12) einerseits aneinander stoßend und andererseits einander überlappend angeordnet sind und sich die Enden von Gruppen der Stahlseile (2) in Längsrichtung des Fördergurtes voneinander im Abstand befinden. Dabei enden zumindest bei der Mehrzahl der Stahlseile (2) die Seillitzen (22), welche die Seilseele (21) der einzelnen Stahlseile (2) umgeben, in unterschiedlichen Abständen von den Enden der Seilseele (21), wodurch sich die Querschnitte der Stahlseile (2) zu deren Enden hin verkleinern.

## Beschreibung

Die gegenständliche Erfindung betrifft einen Fördergurt für eine Bandförderanlage, welcher aus Gummi oder einem gummiartigen Kunststoff hergestellt ist und welcher durch sich in Längsrichtung des Gurtes erstreckende und zumindest angenähert parallel zueinander verlaufende Stahlseile verstärkt ist, wobei der Fördergurt aus miteinander verbundenen Abschnitten hergestellt ist und die Stahlseile, welche aus einer innen befindlichen Seilseele und diese schraubenlinienförmig umgebende Seillitzen bestehen, in den Endbereichen der Abschnitte einerseits aneinander stoßend und andererseits einander überlappend angeordnet sind und wobei sich weiters die Enden von Gruppen der Stahlseile in Längsrichtung des Fördergurtes voneinander im Abstand befinden.

Da Bandförderanlagen beliebig große Längen aufweisen können, trifft dies auch für die in diesen befindlichen Fördergurte zu. Fördergurte können jedoch, insbesondere auch deshalb, da sie mit aus Stahlseilen bestehenden Verstärkungen ausgebildet sind, aufgrund des hohen Gewichtes nur in begrenzten Längen hergestellt und transportiert werden. Somit besteht das Erfordernis, die für Bandförderanlagen erforderlichen Fördergurte in Abschnitten herzustellen, diese an denjenigen Ort, an welchem die Bandförderanlage errichtet wird, zu transportieren und dort die einzelnen Abschnitte zu einem in sich geschlossenen Fördergurt zu verbinden.

Die Verbindung der einzelnen Abschnitte der Fördergurte erfolgt dadurch, dass an den aufeinander folgenden Enden der Abschnitte die in den Fördergurten befindlichen Stahlseile freigelegt werden, dass die Enden eines ersten Teiles der Stahlseile der aufeinander folgenden Abschnitte aneinander gefügt werden, wobei sie einander fortsetzen sowie aneinander stoßen, und dass die Endbereiche eines zweiten Teiles der Stahlseile nebeneinander angeordnet werden, wobei sich die Endbereiche des zweiten Teiles der Stahlseile von aufeinander folgenden Abschnitten überlappen. In der Folge wird die Verbindung der beiden aufeinander folgenden Abschnitte des Fördergurtes durch Aufvulkanisieren von Gummiplatten und Gummimaterial fertiggestellt.

Um die erforderliche dynamische Zugfestigkeit eines aus Abschnitten hergestellten Fördergurtes zu gewährleisten, ist es bekannt, die Stahlseile in den Bereichen der Verbindung von zwei Abschnitten in mehrere Gruppen zu unterteilen, deren Enden sich voneinander im Abstand befinden. So werden z.B. die Stahlseile in drei Gruppen mit voneinander in Längsrichtung im Abstand befindlichen Enden unterteilt. Dabei sind die Stahlseile von zwei Gruppen, welche in Längsrichtung des Fördergurtes in angenähert gleichen Abständen voneinander enden, durch auf diese stoßende Stahlseile fortgesetzt und sind seitlich neben diesen Stahlseilen weitere Stahlseile vorgesehen, welche sich über die Stoßstellen hinaus erstrecken und welche durch keine anstoßenden Stahlseile fortgesetzt sind, sondern welche sich mit den Endbereichen von daneben liegenden Stahlseilen überlappen. Eine solche Verbindungsart wird als dreistufig bezeichnet. Bei einer Mehrzahl von in Längsrichtung des Fördergurtes gegeneinander versetzten Stoßstellen wird eine derartige Verbindung als mehrstufig bezeichnet.

Diese bekannte Verbindung von Abschnitten eines Fördergurtes entspricht jedoch deshalb nicht den Erfordernissen des Betriebes, da im Fördergurt aufgrund der Überlappungen von Endbereichen der Stahlseile sehr hohe Scherspannungen auftreten, welche dadurch vergrößert werden, dass in diesen Bereichen gegenüber den anderen Bereichen der Anteil der Stahlverstärkung vergrößert und der Anteil an Gummimaterial verringert ist, weswegen in diesen Bereichen die Elastizität des Fördergurtes und deshalb dessen dynamische Zugfestigkeit vermindert sind. Deshalb treten im Betrieb in diesen Bereichen des Fördergurtes die ersten Rissbildungen und Brüche auf.

Der gegenständlichen Erfindung liegt somit die Aufgabe zugrunde, die Elastizität eines Fördergurtes in den Bereichen der Enden von Abschnitten, welche miteinander verbunden werden, dadurch zu erhöhen, dass der Anteil der Stahlverstärkung vermindert und der Anteil an Gummi bzw. an gummielastischem Material vergrößert wird. Diese Aufgabe wird erfindungsgemäß dadurch gelöst, dass zumindest bei der Mehrzahl der Stahlseile die Seillitzen, welche die Seilseele der einzelnen Stahlseile umgeben, in unterschiedlichen Abständen vom Ende der Seilseele enden, wodurch sich die Querschnitte der Stahlseile zu deren Enden hin verkleinern.

Vorzugsweise befinden sich die Enden von Gruppen der Stahlseile in Längsrichtung des Fördergurtes voneinander in zumindest angenähert gleichen Abständen, wobei Gruppen von etwa 10 % bis etwa 50 % der Stahlseile zumindest angenähert in gleichen Querschnitten des Fördergurtes enden.

Vorzugsweise sind etwa 50 % bis etwa 90 % der Stahlseile durch anstoßende Stahlseile fortgesetzt und weisen etwa 50 % bis 10 % der Stahlseile solche Längen auf, dass sich die Endbereiche von nebeneinander liegenden Stahlseilen überlappen, wobei sie nicht durch anstoßende Stahlseile fortgesetzt sind. Weiters können die einzelnen Stahlseile einer Gruppe mit angenähert in einem Querschnitt des Fördergurtes befindlichen Enden über die Breite des Fördergurtes zumindest angenähert regelmäßig verteilt angordnet sein.

Nach einer weiteren bevorzugten Ausführungsform befinden sich die Enden von Gruppen der Seillitzen, welche eine Seilseele umgeben, voneinander in zumindest angenähert gleichen Abständen. Weiters können Gruppen von etwa 10 % bis etwa 30 % der Seillitzen, welche eine Seilseele umgeben, zumindest angenähert in gleichen Querschnitten der Seilseele enden. Zudem sind vorzugsweise die einzelnen Gruppen der Seillitzen, welche angenähert in gleichen Querschnitten der Seilseele enden, über den Umfang der Seilseele zumindest angenähert regelmäßig verteilt.
Weiters befinden sich vorzugsweise die Enden der einzelnen Seillitzen bzw. der Gruppen von Seillitzen voneinander in solchen Abständen, welche dem halben Durchmesser der Stahlseile bis dem zehnfachen Durchmesser der Stahlseile entsprechen.

Ein erfindungsgemäßer Fördergurt ist nachstehend anhand eines in der Zeichnung dargestellten Ausführungsbeispieles näher erläutert. Es zeigen:
- FIG.1: einen erfindungsgemäßen Fördergurt, in axonometrischer schematischer Darstellung,
- FIG.2: die aneinander gefügten Enden von zwei Abschnitten des Fördergurtes gemäß FIG.1, in axonometrischer Darstellung,
- FIG.3: einen Ausschnitt des Fördergurtes gemäß FIG.2, in gegenüber dieser vergrößerter Darstellung,
- FIG.4 und FIG.4a: einen Endbereich eines erfindungsgemäßen Stahlseiles, in axonometrischer Darstellung und in zwei Ansichten, und
- FIG.5: einen Ausschnitt des Fördergurtes gemäß FIG.2 mit erfindungsgemäß ausgebildeten Stahlseilen, in gegenüber FIG.2 vergrößertem Maßstab und in axonometrischer Darstellung.

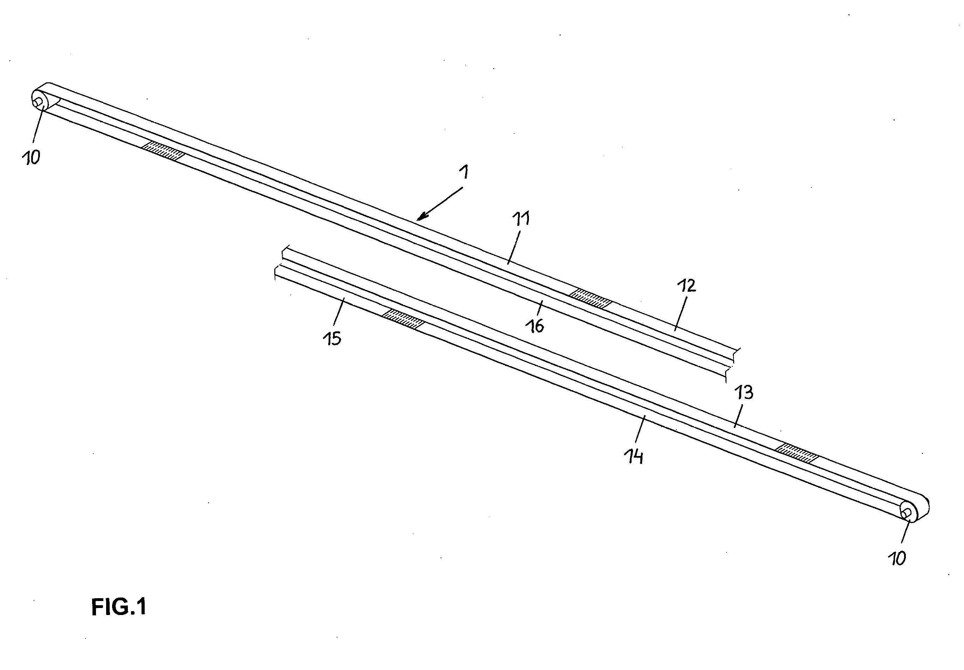

In FIG. 1 ist eine Förderanlage schematisch dargestellt. Diese Förderanlage weist einen Fördergurt 1 auf, welcher in sich geschlossen ist, wobei er an den Enden der Förderanlage über Umlenktrommeln 10 geführt ist. Der Fördergurt 1 von derartigen Förderanlagen, welche sich z.B. über 15 km bis 20 km erstrecken können, besteht aus einer Vielzahl von Abschnitten 11 bis 16, welche an ihren Enden miteinander verbunden sind. Die einzelnen Abschnitte können Längen von 200 m bis 1000 m aufweisen. Die Breite des Fördergurtes 1 beträgt zwischen 0,4 m und 3,5 m. Der Fördergurt 1 besteht aus Gummi oder einem gummiartigen Kunststoffmaterial mit einer Dicke von etwa 2 cm bis etwa 5 cm, wobei er durch eine Vielzahl von nebeneinander angeordneten und sich in Längsrichtung des Fördergurtes 1 erstreckenden Stahlseilen mit Durchmessern von z.B. 6 mm bis 20 mm verstärkt ist.
Die Stahlseile bestehen aus einer Seilseele, welche aus einer Vielzahl von Drähten besteht, und aus Seillitzen, welche gleichfalls aus einer Vielzahl von Drähten bestehen und welche die Seilseele schraubenlinienförmig umgeben.

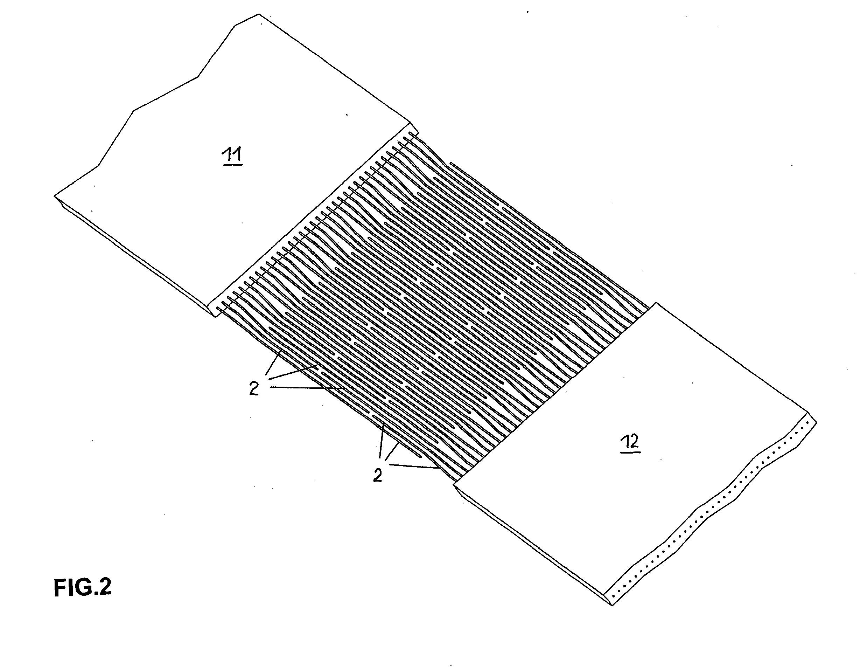

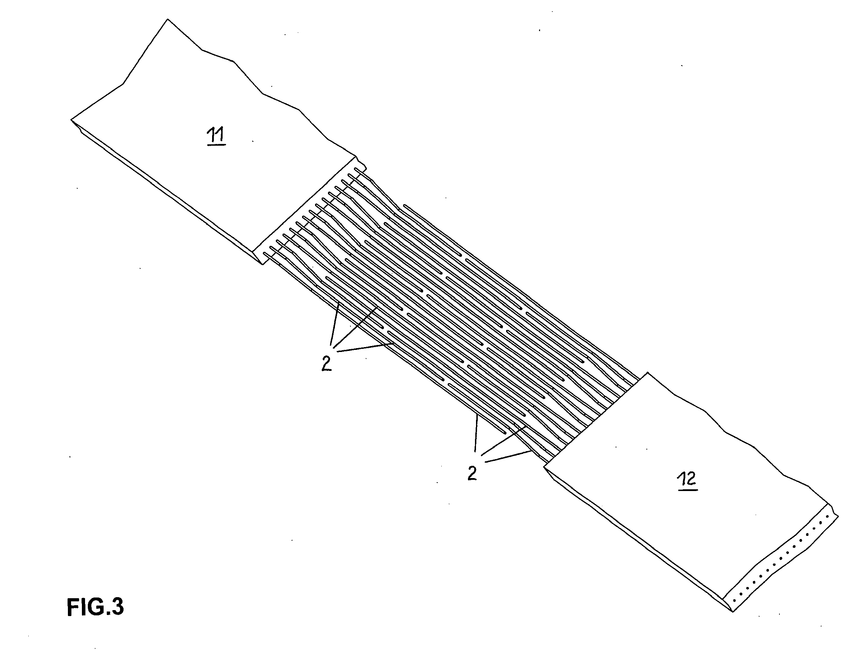

Wie dies in den FIG.2 und FIG.3 dargestellt ist, werden an den Verbindungsstellen von zwei Abschnitten 11 und 12 die Endbereiche der Stahlseile 2 freigelegt und werden diese Endbereiche einerseits einander überlappend und andererseits aneinander stoßend und einander fortsetzend angeordnet. Dabei können die Stahlseile 2 in Gruppen unterteilt sein, deren Enden sich voneinander in Abständen befinden. Diese Verbindungen werden je nach der Anzahl der Querschnitte des Fördergurtes 1, in welchen sich die Enden der Stahlseile 2 befinden, als einstufig, zweistufig, dreistufig oder mehrstufig bezeichnet.
In den FIG.2 und FIG.3 ist eine dreistufige Verbindung dargestellt.

Bei bekannten Fördergurten 1 ist in den Bereichen der Verbindung von zwei Abschnitten 11 und 12 aufgrund der Überlappungen der Endbereiche der Stahlseile 2 der Anteil an Stahleinlagen in Bezug auf den Anteil an Gummi bzw. gummiartigem Material wesentlich höher als in den zwischen den Verbindungen befindlichen Bereichen der Fördergurte 1, weswegen diese Fördergurte 1 in den Bereichen der Verbindungen wesentlich weniger elastisch sind bzw. deren dynamische Zugfestigkeit wesentlich geringer ist, als dies in den übrigen Bereichen der Fall ist.

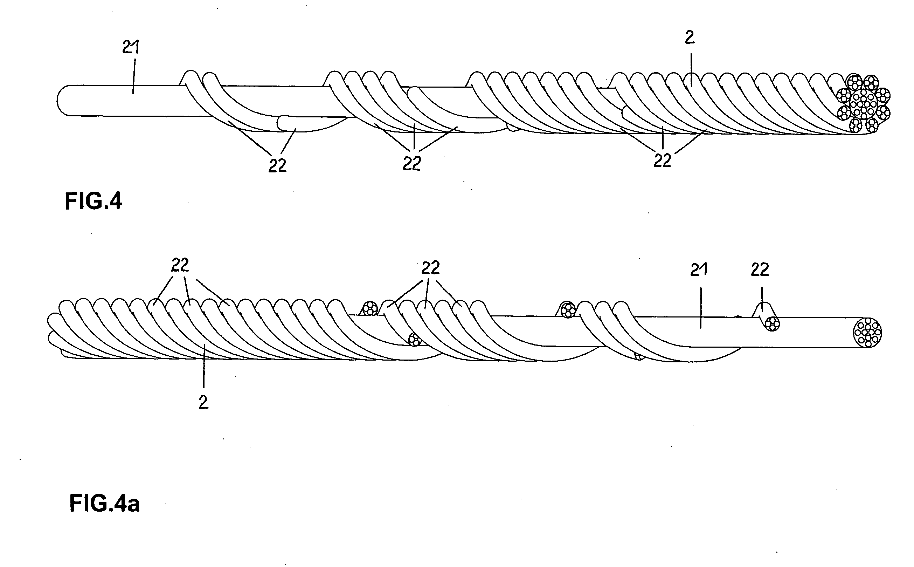

Wie dies in den FIG.4 und FIG.4a dargestellt ist, bestehen die Stahlseile 2 aus einer Seilseele 21, welche aus einer Vielzahl von Drähten bestehen, und weiters aus einer Vielzahl von Seillitzen 22, welche gleichfalls aus einer Vielzahl von Drähten bestehen und welche die Seilseele 21 schraubenlinienförmig umgeben. Gemäß der gegenständlichen Erfindung enden die einzelnen Seillitzen 22 in unterschiedlichen Abständen von den Enden der Seilseele 21. Hierdurch wird in den Bereichen der Verbindung von zwei Abschnitten der Anteil an Stahleinlagen vermindert bzw. wird der Anteil an Gummi bzw. an gummielastischem Material vergrößert, wodurch die Elastizität des Fördergurtes 1 in den Bereichen der Verbindung von zwei Abschnitten vergrößert wird. Hierdurch werden weiters in diesen Bereichen die Scherspannungen vermindert.

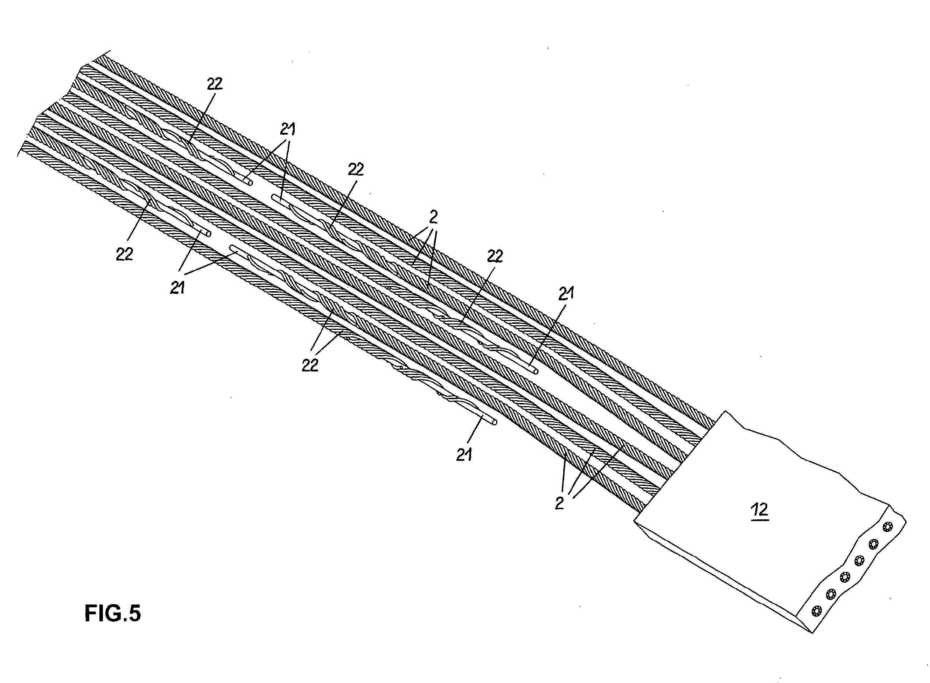

Wie dies weiters aus FIG.5 ersichtlich ist, weisen sowohl die Endbereiche derjenigen Stahlseile 2, welche einander überlappend angeordnet sind, als auch die Endbereiche derjenigen Stahlseile 2, welche aneinander stoßend und einander fortsetzend angeordnet sind, dadurch dass die Seillitzen 22 in unterschiedlichen Abständen von den Enden der Seilseelen 21 enden, zu deren Enden hin sich verkleinernde Querschnitte auf.

Die schraubenlinienförmig verlaufenden Seillitzen 22 können dabei zu Gruppen zusammengefasst sein, deren Enden in gleichen Querschnitten der Stahlseile 2 enden, wobei die einzelnen Seillitzen 22 dieser Gruppen sich nebeneinander befinden können oder über den Umfang der Stahlseile 2 verteilt sein können.

Der erfindungsgemäße Effekt wird auch dann erzielt, wenn die Enden von zumindest der Mehrzahl der Stahlseile 11 mit erfindungsgemäß unterschiedlich verkürzten Seillitzen 22 ausgebildet sind.

Die Abstände zwischen den Enden der einzelnen Seillitzen 22 bzw. der Gruppen von Seillitzen 22, welche die Seilseelen 21 umgeben, weisen Werte zwischen dem halben Durchmesser der Stahlseile 2 und dem zehnfachen Durchmesser der Stahlseile 2 auf.

## Patentansprüche

1. Fördergurt (1) für eine Bandförderanlage, welcher aus Gummi oder einem gummiartigen Kunststoff hergestellt ist und welcher durch sich in Längsrichtung des Fördergurtes (1) erstreckende und zumindest angenähert parallel zueinander verlaufende Stahlseile (2) verstärkt ist, wobei der Fördergurt (1) aus miteinander verbundenen Abschnitten (11, 12) besteht und die Stahlseile (2), welche eine innen befindliche Seilseele (21) und diese schraubenlinienförmig umgebende Seillitzen (22) aufweisen, in den Endbereichen der Abschnitte (11, 12) einerseits aneinander stoßend und andererseits einander überlappend angeordnet sind und sich die Enden von Gruppen der Stahlseile (2) in Längsrichtung des Fördergurtes (1) voneinander im Abstand befinden, **dadurch gekennzeichnet, dass** zumindest bei der Mehrzahl der Stahlseile (2) die Seillitzen (22), welche die Seilseele (21) der einzelnen Stahlseile (2) umgeben, in unterschiedlichen Abständen von den Enden der Seilseele (21) enden, wodurch sich die Querschnitte der Stahlseile (2) zu deren Enden hin verkleinern.

2. Fördergurt (1) nach Patentanspruch 1, **dadurch gekennzeichnet, dass** die Enden von Gruppen der Stahlseile (2) in Längsrichtung des Fördergurtes (1) sich voneinander in zumindest angenähert gleichen Abständen befinden.

3. Fördergurt nach einem der Patentansprüche 1 und 2, **dadurch gekennzeichnet, dass** Gruppen von etwa 10 % bis 50 % der Stahlseile (2) zumindest angenähert im gleichen Querschnitt des Gurtes enden.

4. Fördergurt nach einem der Patentansprüche 1 bis 3, **dadurch gekennzeichnet, dass** etwa 50% bis etwa 90% der Stahlseile (2) durch aneinander stoßende Stahlseile (2) fortgesetzt sind und dass etwa 50 % bis 10 % der Stahlseile (2) solche Längen aufweisen, dass sich die Endbereiche von jeweils nebeneinander liegenden Stahlseilen (2) überlappen, wobei sie nicht durch anstoßende Stahlseile (2) fortgesetzt sind.

5. Fördergurt nach einem der Patentansprüche 1 bis 4, **dadurch gekennzeichnet, dass** die einzelnen Stahlseile (2) einer Gruppe mit angenähert in einem der Querschnitte derselben befindlichen Enden über die Breite des Fördergurtes (1) zumindest angenähert regelmäßig verteilt angordnet sind.

6. Fördergurt nach einem der Patentansprüche 1 bis 5, **dadurch gekennzeichnet, dass** die Enden von Gruppen der Seillitzen (22), welche eine Seilseele (21) umgeben, sich voneinander in zumindest angenähert gleichen Abständen voneinander befinden.

7. Fördergurt nach einem der Patentansprüche 1 bis 6, **dadurch gekennzeichnet, dass** Gruppen von etwa 10 % bis etwa 30 % der Seillitzen (22), welche eine Seilseele (21) umgeben, zumindest angenähert in gleichen Querschnitten der Seilseele (21) enden.

8. Fördergurt nach einem der Patentansprüche 1 bis 7, **dadurch gekennzeichnet, dass** die einzelnen Gruppen der Seillitzen (22), welche angenähert in gleichen Querschnitten der Seilseele (21) enden, über den Umfang der Seilseele (21) zumindest angenähert regelmäßig verteilt sind.

9. Fördergurt nach einem der Patentansprüche 1 bis 8, **dadurch gekennzeichnet, dass** die Enden der einzelnen Seillitzen (22) bzw. der Gruppen von Seillitzen (22) sich voneinander in solchen Abständen befinden, welche dem halben Durchmesser der Stahlseile (2) bis dem zehnfachen Durchmesser der Stahlseile (2) entsprechen.
